(19) Europäisches Patentamt
European Patent Office
Office européen des brevets

(11) **EP 4 543 694 B1**

(12) **EUROPEAN PATENT SPECIFICATION**

(45) Date of publication and mention
of the grant of the patent:
**22.07.2026  Bulletin 2026/30**

(21) Application number: **22734611.1**

(22) Date of filing: **22.06.2022**

(51) International Patent Classification (IPC):
*B60C 23/06* (2006.01)    *G01P 3/50* (2006.01)
*B60W 40/12* (2012.01)    *G01S 13/34* (2006.01)
*G01S 13/58* (2006.01)    *G01S 13/60* (2006.01)
*G01S 13/87* (2006.01)    *G01S 13/92* (2006.01)
*G01S 15/08* (2006.01)    *G01S 15/88* (2006.01)
*G01S 7/41* (2006.01)

(52) Cooperative Patent Classification (CPC):
**B60C 23/067; B60W 40/12; G01S 7/41;**
**G01S 13/34; G01S 13/589; G01S 13/60;**
**G01S 13/87; G01S 13/92; G01S 15/08; G01S 15/88**

(86) International application number:
**PCT/EP2022/067026**

(87) International publication number:
**WO 2023/247027 (28.12.2023 Gazette 2023/52)**

(54) **ARRANGEMENT FOR DETERMINING PROPERTIES OF A TYRE**

ANORDNUNG ZUR BESTIMMUNG VON EIGENSCHAFTEN EINES REIFENS

AGENCEMENT POUR DÉTERMINER DES PROPRIÉTÉS D'UN PNEU

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**30.04.2025  Bulletin 2025/18**

(73) Proprietor: **VOLVO TRUCK CORPORATION**
**405 08 Göteborg (SE)**

(72) Inventors:
• **HENDERSON, Leon**
**438 92 Härryda (SE)**
• **ARIKERE, Adithya**
**412 75 Göteborg (SE)**
• **RYDSTRÖM, Mats**
**427 39 Billdal (SE)**
• **JONASSON, Mats**
**433 49 Partille (SE)**

(74) Representative: **Ström & Gulliksson AB**
**P.O. Box 4188**
**203 13 Malmö (SE)**

(56) References cited:
EP-A1- 1 600 345         WO-A1-2019/197929
DE-A1- 102010 000 867

**Description**

TECHNICAL FIELD

The present invention relates to methods and control units for ensuring safe and efficient vehicle motion management of a heavy-duty vehicle. The methods are particularly suitable for use with articulated vehicles, such as trucks and semi-trailers comprising a plurality of vehicle units. The invention can however also be applied in other types of vehicles, e.g., in construction equipment and in mining vehicles, as well as in cars.

BACKGROUND

Heavy-duty vehicles, such as trucks and semi-trailer vehicles, are designed to carry heavy loads. The heavily laden vehicles must be able to start from standstill also in uphill conditions, accelerate on various types of road surfaces, and most importantly be able to reduce velocity, i.e., brake, in a controlled and reliable manner at all times. It is also important that the vehicle can be operated in an energy efficient manner without unnecessary component wear. A key property to achieving this functionality are a well-designed set of tyres. Thus, much work has gone into developing tyres for heavy-duty vehicles, where a well-designed tyre provides a combination of high friction and low rolling resistance. A well designed tyre also has a low wear rate, i.e., it is mechanically durable and lasts for a long period of time.

The tyres play a major role in determining the behavior and capabilities of the vehicle, and thus for managing the operation of the vehicle. It is thus beneficial to be able to provide a real-time analysis of different tyre properties on a vehicle that quickly reacts to changes in tyre and/or road properties.

US5793285 discloses an arrangement for monitoring tyres on a vehicle to detect adverse tyre operating states by continuously measuring the distance between the associated vehicle axle and the road while the vehicle is in operation. Yet another prior art document is found in WO 2019/197929.

However, there is a continuing need for further improvements in vehicle motion management in heavy-duty vehicles.

SUMMARY

It is an object of the present invention to provide techniques which alleviate or overcome at least some of the above-mentioned problems. This object is at least in part obtained by a method for determining an effective rolling radius of a tyre mounted on a heavy-duty vehicle. The method comprises determining a measured distance between a predefined point of the vehicle and a ground plane supporting the vehicle. The method also comprises determining a loaded tyre radius of a tyre of said vehicle at least based on said measured distance, obtaining a pre-determined relationship between loaded tyre radius and effective rolling radius for the tyre, and determining the effective rolling radius of the tyre based on the determined loaded tyre radius and on the pre-determined relationship between loaded tyre radius and effective rolling radius for the tyre. This method provides a determination of the effective rolling radius in real-time which is important information for managing the operation of the vehicle. The method also allows tracking of the rolling radius over time, which means that changes in effective rolling radius that follow from changes in vehicle operating conditions, such as different loads, will be reflected in the overall vehicle motion management.

According to aspects, the pre-determined relationship is obtained in dependence of tyre design data of the tyre obtained from a memory related to tyre design. Different types of tyres may have different properties and may react differently to events such as low road friction, high temperatures, rain, and so on. By accounting for the tyre design, the modelling of the relationship between loaded tyre radius and effective rolling radius for the tyre can be made more accurate. The data related to tyre design may, e.g., comprise any of: tyre nominal dimension, tyre structural characteristics, tyre chemical composition, and tyre history, such as how much the tyre has been in use.

According to aspects, the pre-determined relationship is obtained in dependence of input data from one or more sensors arranged to measure one or more operating parameters of the tyre. The sensors can be configured to provide real-time data from the tyre, thus enabling a real-time dynamic determination of the effective rolling radius which quickly reacts to changes in tyre properties. Thus, if tyre properties change, the determination of the effective rolling radius will take this into account.

According to aspects, the one or more operating parameters comprise any of: vehicle speed, wheel rotation speed, tyre pressure, tyre temperature, tyre acceleration, tyre strain, tyre GPS position, weather, ambient temperature, rain classification data, normal load, slip angle, steer angle, wheel load measurement, axle load measurement, applied torque and suspension parameters. Having accurate information about one or more of these parameters facilitates accurate determination of the effective rolling radius, and thus efficient and/or safe vehicle control.

In some aspects, the loaded tyre radius is determined based on the measured distance d1 and load measurements obtained from a suspension system.

According to aspects, the pre-determined relationship is obtained in dependence of one or more estimated tyre parameters that comprise any of: tyre wear, tyre longitudinal stiffness, tyre lateral stiffness, tyre rolling resistance, tyre peak friction, tyre contact patch properties, tyre balance properties and wheel alignment properties. Having accurate information about one or more of these parameters facilitates accurate determination of the effective rolling radius, and thus efficient and/or safe vehicle control.

According to aspects, the measured distance is determined by receiving a radar signal, from at least one radar transceiver, directed at a known angle between the vertical and horizontal plane of the heavy-duty vehicle. The measured distance is determined by adjusting the distance measured by the radar signal by compensating for the known angle A1. A radar transceiver is an accurate way of determining a distance in a moving vehicle.

According to aspects, the method further comprises repeatedly updating the determined effective rolling radius. Thus, the determined effective rolling radius is kept up to date, despite changes in e.g., operating conditions and tyre state.

According to further aspects, the method further comprises repeatedly updating the pre-determined relationship between the loaded tyre radius and the effective rolling radius of the tyre. Thus, the pre-determined relationship is kept up to date, despite changes in e.g., operating conditions and tyre state.

According to aspects, the method further comprises determining a reliability factor of the measured distance. The method may further comprise updating the determined effective rolling radius upon the reliability factor exceeding a predefined reliability threshold indicating that the measured distance is determined as reliable. It is beneficial if the effective rolling radius only is updated if the measured distance is reliable and it can be assumed that the measured distance is correct.

According to aspects, the method further comprises determining a wheel slip and/or slip angle of the wheel by obtaining information relating to rotational velocity of a wheel of the heavy-duty vehicle and determining the wheel slip and/or slip angle of the wheel based on the rotational velocity of a wheel and on the effective rolling radius. It is advantageous to be able to determine wheel slip and/or slip angle in an accurate way, as this information could be used to control the motion of the heavy-duty vehicle, for example using a simulated tyre model.

According to aspects, the method further comprises detecting a tyre blow-out event by comparing the measured distance to a range of expected distances, and detecting a tyre blow-out condition when the measured distance is outside of the range of expected distances within a predefined time period. It is beneficial to be able to early detect a tyre blow-out event as it is a cause of accidents due to loss of control of the vehicle.

According to aspects, the method further comprises determining a ground clearance based on said measured distance and on a pre-determined relationship between measured distance and ground clearance of the heavy-duty vehicle. It is beneficial to be able to accurately determine the ground clearance as it is an important factor in determining several characteristics of a vehicle, especially if a self-leveling suspension system is present.

According to one aspect, an arrangement for determining at least an effective rolling radius of a tyre mounted on a heavy-duty vehicle is provided. The arrangement comprises a control unit configured to determine a measured distance between a predefined point of the vehicle and a ground plane supporting the vehicle, determine a loaded tyre radius of a tyre of said vehicle based on said measured distance, obtain a pre-determined relationship between loaded tyre radius and effective rolling radius for the tyre, and determine the effective rolling radius of the tyre based on the determined loaded tyre radius and on the pre-determined relationship between loaded tyre radius and effective rolling radius for the tyre.

In some aspects, the arrangement according further comprises at least one radar transceiver. The at least one radar transceiver is arranged to transmit and to receive a radar signal that is directed in a known angle between the vertical and horizontal plane of the heavy-duty vehicle. The control unit is configured to determine the measured distance by adjusting the distance measured by the radar signal by compensating for the known angle.

In some aspects, the control unit is configured to obtain the vehicle speed from the at least one radar transceiver.

In some aspects the vehicle speed comprises information relating to a longitudinal speed of the vehicle and/or lateral speed of the vehicle.

In some aspects, the control unit is further configured to determine a prediction and/or estimation of a road surface roughness and/or road surface classification at least based on the measured distance and the vehicle speed.

In some aspects, the at least one radar transceiver is mounted at an angle between the vertical and horizontal plane of the heavy-duty vehicle.

There is also disclosed herein control units, vehicles, computer programs, computer readable media, and computer program products associated with the above discussed advantages.

Generally, all terms used in the claims are to be interpreted according to their ordinary meaning in the technical field, unless explicitly defined otherwise herein. All references to "a/an/the element, apparatus, component, means, step, etc." are to be interpreted openly as referring to at least one instance of the element, apparatus, component, means, step, etc., unless explicitly stated otherwise. The steps of any method disclosed herein do not have to be performed in the exact order disclosed, unless explicitly stated.

Further features of, and advantages with, the present invention will become apparent when studying the appended claims and the following description. The skilled person realizes that different features of the present invention may be combined to create embodiments other than those described in the following, without departing from the scope of the present invention.

BRIEF DESCRIPTION OF THE DRAWINGS

The above, as well as additional objects, features and advantages, will be better understood through the following illustrative and non-limiting detailed description of exemplary embodiments, wherein:

| | |
|---|---|
| Figure 1 | illustrates a vehicle for cargo transport; |
| Figures 2A-B | illustrate a tyre of a vehicle |
| Figure 3 | is a graph showing example tyre forces as function of wheel slip; |
| Figures 4A-B | illustrate examples of an arrangement in a heavy-duty vehicle; |
| Figures 5A-D | is a flow chart illustrating methods; |
| Figures 6A-B | illustrates a radar system; |
| Figure 7 | illustrates an example heavy-duty vehicle; |
| Figures 8A-B | illustrate a detection principle based on Doppler difference; |
| Figure 9 | schematically illustrates a ground radar system; |
| Figures 10A-B | show range-Doppler maps of example received radar signals; |
| Figure 11 | schematically illustrates a sensor unit and/or a control unit; and |
| Figure 12 | schematically illustrates an example computer program product. |

DETAILED DESCRIPTION

The present invention will now be described more fully hereinafter with reference to the accompanying drawings, in which exemplary embodiments are shown. The invention may, however, be embodied in many different forms and should not be construed as limited to the embodiments set forth herein; rather, these embodiments are provided for thoroughness and completeness. Like reference character refer to like elements throughout the description.

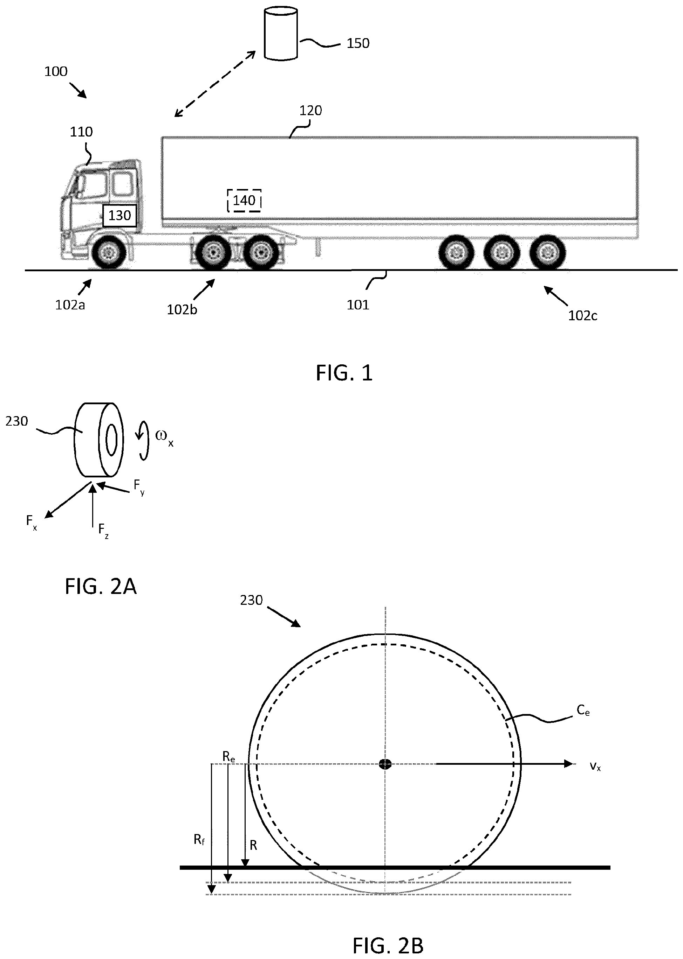

Figure 1 illustrates a heavy-duty vehicle 100. This particular example comprises a tractor unit 110 which is arranged to tow a trailer unit 120. The tractor 110 comprises a vehicle control unit (VCU) 130 arranged to control various functions of the vehicle 100. For instance, the VCU may be arranged to perform a vehicle motion management (VMM) function comprising control of wheel slip, vehicle unit stability, and so on. The trailer unit 120 optionally also comprises a VCU 140, which then controls one or more functions on the trailer 120. The VCU or VCUs may be communicatively coupled, e.g., via wireless link, to a remote server 150. This remote server may be arranged to perform various configurations of the ECU, and to provide various forms of data to the ECU 130, such as providing data regarding the make and type of tyres mounted on the vehicle 100, as will be discussed in more detail below.

The vehicle combination 100 may of course also comprise additional vehicle units, such as one or more dolly units and more than one trailer unit.

The vehicle 100 is supported by wheels 102, where each wheel comprises a tyre. The tractor unit 110 has front wheels 102a which are normally steered, and rear wheels 102b of which at least one pair are driven wheels. Generally, the rear wheels of the tractor 110 may be mounted on tag or pusher axles. A tag axle is where the rear-most drive axle is non-powered, also referred to as a free-rolling or dead axle. A pusher axle is where the forward-most drive axle is not powered. The trailer unit 120 is supported on trailer wheels 102c. Trailers with driven wheels, and even a steered axle, are also possible.

One of the rear axles and/or one of the axles on the trailer 120 may be a liftable axle. A lift axle, also known as a retractable axle, is an axle which can be raised so that its tyres are not touching the road surface. This improves fuel economy and reduces maintenance and tyre wear. It may also reduce or increase dynamic stability features of the vehicle and it can increase or decrease road wear depending on vehicle load, which axles that are lifted and in which driving situation the axle is lifted. One or more of the wheels may also be mounted with an active suspension which may be controlled by the VCU 130, 140, e.g., in order to adjust a normal force of one or more tyres.

Figure 2A illustrates forces acting on a tyre 230. The tyres 230 on the wheels 102a-c of a vehicle, such as the vehicle 100, play a major role in determining the behavior and capabilities of the vehicle 100. A well-designed set of tyres will provide both good traction and fuel economy, while a poorly designed set of tyres, or overly worn tyres, are likely to reduce both traction and fuel economy and may even result in an unstable vehicle combination, which of course is undesired.

With reference to Figure 2A, a tyre 230 is subject to a longitudinal force $F_x$, a lateral force $F_y$, and a normal force $F_z$. The normal force $F_z$ is key to determining some important vehicle properties. For instance, the normal force to a large extent determines the achievable longitudinal tyre force $F_x$ by the wheel since, normally, $F_x \leq \mu F_z$, $\mu$ a friction coefficient associated with a road friction condition. The maximum available lateral force for a given lateral slip can be described by the so-called Magic Formula as described in "Tyre and vehicle dynamics", Elsevier Ltd. 2012, ISBN 978-0-08-097016-5, by Hans Pacejka, where wheel slip and tyre force is also discussed in more detail.

Many VMM systems rely on real-time knowledge of the vehicles motion relative to the road surface. In prior art systems, this information is estimated based primarily on wheel speed information, as well as on measurements received from accelerometers and gyroscopes. These methods can only provide accurate estimates for situations where both the rolling circumference of the tyres are known, and where the level of wheel slip between the tyre and road can be accurately predicted for at least some of the wheels. The radius of the tyre through which wheel torque acts (i.e. loaded tyre radius) is also important when mapping the global forces and actuator torque requests in vehicle motion management control.

The present invention relates to an arrangement and a method for determining tyre parameters, and more specifically to arrangements and methods for determining an effective rolling radius of a tyre 230 mounted on a vehicle such as the heavy-duty vehicle 100. This is achieved by using a measured distance and a pre-determined relationship between loaded tyre radius and effective rolling radius for the tyre. The arrangement and method may also be used to determine further parameters related to the tyre, to road conditions and also to the vehicle 100 itself, such as for example wheel slip, slip angle, tyre-blow out event, ground clearance, road surface roughness and road surface classification. By the present methods and arrangement, it is possible to gain a real time estimation of the effective rolling radius, and thus also real-time estimations of other parameters being depending on accurate effective rolling radius estimations.

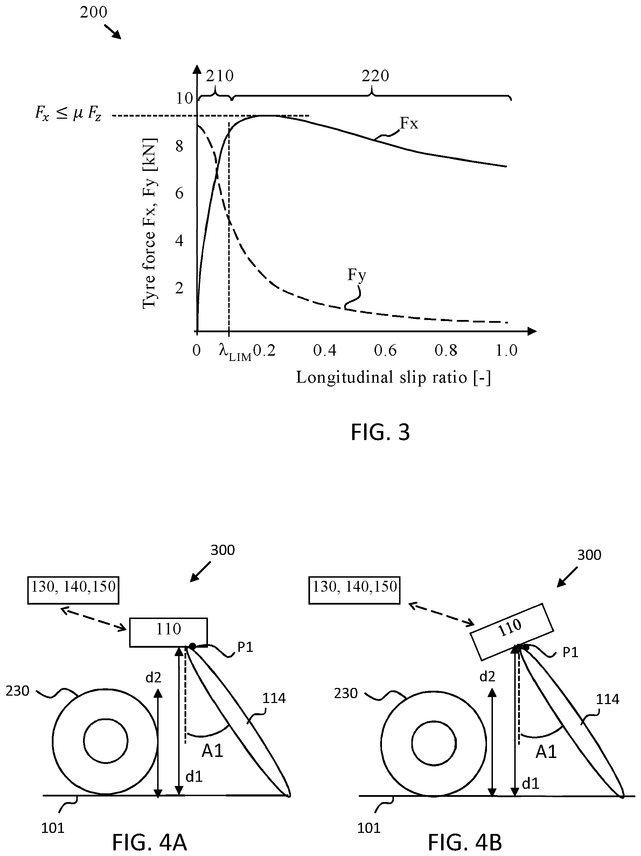

Before turning into details of the arrangement and methods with reference to Figures 4 - 11, some important properties and characteristic parameters of a tyre will be discussed with reference to Figures 2-3. These tyre parameters are optionally comprised in a tyre model, either as tyre parameters from which other capabilities and characteristics of the tyre can be determined by the VCU 130, 140, or simply as tyre characteristics which can be used more or less directly by the VCU 130, 140 to optimize various control decisions.

The illustration in Figure 2B shows a tyre 230 that moves at a speed $v_x$ under applied load. The radius $R_e$ is the radius of the tyre in an un-loaded and stationary state, the radius $R_f$ is the free undeformed radius that may vary along the tyre circumference due to tyre nonuniformity, and $R_e$ is the effective rolling radius. The loaded tyre radius $R_e$ is defined as the vertical distance between the wheel center and the horizontal surface. A free rolling tyre rotates around a point near the contact patch. For a rigid wheel on a flat horizontal surface, this point coincides with the single contact point between tyre and road. Thus, the forward speed $v_x$ $v_x$ times (loaded=unloaded) radius. The loaded radius $R_e$ of the tyre in an un-loaded and stationary state of the vehicle 100 is of course equal to the free undeformed radius Rf when no wheel load is applied. The denotation $C_e$ defines an effective rolling circle of the tyre and is used to estimate the free undeformed radius $R_f$, Put differently, the loaded tyre radius $R_e$ is the distance from the center of the wheel down to the flat part which has contact with ground, as shown in Figure 2B. The effective wheel radius may be defined as the rolled distance normalized with 2*pi, assuming that no slip is present.

A tyre rotating at higher speeds tends to develop a larger diameter, i.e., a larger rolling radius, due to centrifugal forces that force the tread rubber away from the axis of rotation. This effect is often referred to as centrifugal growth. As the tyre diameter grows, the tyre width decreases. Excessive centrifugal growth may significantly impact the behavior of a tyre.

Rolling resistance is the resistance to rolling caused by deformation of the tyre in contact with the road surface. As the tyre rolls, tread enters the contact area and is deformed flat to conform to the roadway. The energy required to make the deformation depends on the inflation pressure, rotating speed, and numerous physical properties of the tyre structure, such as spring force and stiffness. Tyre makers often seek lower rolling resistance tyre constructions to improve fuel economy in trucks, where rolling resistance accounts for a high proportion of fuel consumption.

The pneumatic trail of a tyre is the trail-like effect generated by resilient material tyres rolling on a hard surface and subject to side loads, as in a turn. The pneumatic trail parameter of a tyre describes the distance where the resultant force of a tyre sideslip occurs behind the geometric center of the contact patch of the tyre.

Slip angle or sideslip angle, denoted $\alpha$ herein, is the angle between a rolling wheel's actual direction of travel and the direction towards which it is pointing (i.e., the angle of the vector sum of the wheel translational velocity.

The relaxation length of a tyre is a property of a pneumatic tyre that describes the delay between when a slip angle is introduced and when the cornering force reaches its steady state value. Normally, relaxation length is defined as the rolling distance needed by the tyre to reach 63% of the steady state lateral force, although other definitions are also possible.

Vertical stiffness, or spring rate, is the ratio of vertical force to vertical deflection of the tyre, and it contributes to the overall suspension performance of the vehicle. In general, spring rate increases with inflation pressure. The vertical tyre stiffness as a function of tyre pressure is known from the design of the tyre.

The contact patch, or footprint, of the tyre, is the area of the tread that is in contact with the road surface. This area transmits forces between the tyre and the road via friction. The length-to-width ratio of the contact patch affects steering and cornering behavior. The tyre tread and sidewall elements undergo deformation and recovery as they enter and exit the footprint. Since the rubber is elastomeric, it is deformed during this cycle. As the rubber deforms and recovers, it imparts cyclical forces into the vehicle. These variations are collectively referred to as tyre uniformity. Tyre uniformity is characterized by radial force variation (RFV), lateral force variation (LFV) and tangential force variation. Radial and lateral force variation is measured on a force variation machine at the end of the manufacturing process. Tyres outside the specified limits for RFV and LFV are rejected. Geometric parameters, including radial runout, lateral runout, and sidewall bulge, are measured using a tyre uniformity machine at the tyre factory at the end of the manufacturing process as a quality check.

The cornering force or side force of a tyre is the lateral (i.e. parallel to the road surface) force produced by a vehicle tyre during cornering.

Ride comfort relates to the general experience of the driver or a passenger when riding in a vehicle. The ride comfort is dependent on the behavior of the vehicle, which in turn depends on the properties of the tyres.

Self-aligning torque (SAT) is the torque that a tyre creates as it rolls along that tends to steer it, i.e. rotate it around its vertical axis.

A tyre model can be used to describe the properties of a given tyre, such as those above and also other properties. For instance, a tyre model can be used to define a relationship between longitudinal tyre force Fx for a given wheel and an equivalent longitudinal wheel slip for the wheel. Longitudinal wheel slip $\lambda_x$ relates to a difference between wheel rotational velocity and speed over ground and will be discussed in more detail below. Wheel rotation speed $\omega$ is a rotational speed of the wheel, given in units of, e.g., rotations per minute (rpm) or angular velocity in terms radians/second (rad/sec) or degrees/second (deg/sec). The wheel behavior in terms of wheel force generated in longitudinal direction (in the rolling direction) and/or lateral direction (orthogonal to the longitudinal direction) as function of wheel slip is discussed in "Tyre and vehicle dynamics", Elsevier Ltd. 2012, ISBN 978-0-08-097016-5, by Hans Pacejka. See, e.g., chapter 7 where the relationship between wheel slip and longitudinal force is discussed.

Longitudinal wheel slip $\lambda_x$ may, in accordance with SAE J670 (SAE Vehicle Dynamics Standards Committee January 24, 2008) be defined as

$$\lambda_x = \frac{R_e \omega_x - v_x}{max(|R\omega|, |v_x|)}$$

where $R_e$ is an effective wheel radius in meters, $\omega_x$ is the angular velocity of the wheel, and $v_x$ is the longitudinal speed of the wheel (in the coordinate system of the wheel). Thus, $\lambda_x$ is bounded between -1 and 1 and quantifies how much the wheel is slipping with respect to the road surface. Wheel slip is, in essence, a speed difference measured between the wheel and the vehicle. Thus, the herein disclosed techniques can be adapted for use with any type of wheel slip definition. It is also appreciated that a wheel slip value is equivalent to a wheel speed value given a velocity of the wheel over the surface, in the coordinate system of the wheel.

The lateral slip of a tyre is the angle between the direction it is moving and the direction it is pointing. Lateral slip can occur, for instance, in cornering, and is enabled by deformation in the tyre structure and tread. Despite the name, no actual sliding is necessary for small slip angles. Lateral wheel slip is normally defined as

$$\alpha = \arctan\left(\frac{v_y}{|v_x|}\right)$$

where $v_x$ is a longitudinal velocity component of the wheel motion, and $v_y$ is a lateral velocity component of the wheel motion. Lateral tyre slip is discussed in detail in, e.g., "Tyre and vehicle dynamics", Elsevier Ltd. 2012, ISBN 978-0-08-097016-5, by Hans Pacejka.

Lateral wheel slip $\lambda_y$ can optionally also be defined as

$$\lambda_y = \frac{v_y}{max(|R_e \omega|, |v_x|)}$$

where $v_y$ is the lateral speed of the wheel (in the coordinate system of the wheel), measured on a direction orthogonal to the direction of the longitudinal speed $v_x$.

In order for a wheel (or tyre) to produce a wheel force, slip must occur. For smaller slip values the relationship between slip and generated force are approximately linear, where the proportionality constant is often denoted as the slip stiffness of the tyre.

Figure 3 shows a graph 200 illustrating an example of achievable tyre forces $F_x$, $F_y$ as function of wheel slip. The longitudinal tyre force $F_x$ shows an almost linearly increasing part 210 for small wheel slips, followed by a part 220 with more non-linear behavior for larger wheel slips. The obtainable lateral tyre force $F_y$ decreases rapidly even at relatively small longitudinal wheel slips. It is desirable to maintain vehicle operation in the linear region 210, where the obtainable longitudinal force in response to an applied brake command is easier to predict, and where enough lateral tyre force can be generated if needed. To ensure operation in this region, a wheel slip limit $\lambda_{LIM}$ on the order of, e.g., 0.1, can be imposed on a given wheel. For larger wheel slips, e.g., exceeding 0.1, a more non-linear region 220 is seen.

The wheel forces can in the linear region be described by a stiffness both for longitudinal and lateral tyre force, as

$$F_x = C_x(w, F_z)\lambda_x$$

$$F_y = C_y(w, F_z)\alpha$$

where $w$ is a parameter indicating tyre wear, $\alpha$ is a slip angle of the tyre, and where $C_x$ and $C_y$ are stiffness functions. The tyre stiffnesses $C_x$ and $C_y$ normally increase with wear w and normal force $F_z$. Both functions above represent tyre models which depend on tyre parameters and vehicle state properties. Given a tyre model such as the function $C_x(\cdot)\lambda_x$ and/or the function $C_y(\cdot)\alpha$ and input data related to the tyre parameters w, $F_z$, for a VCU to obtain an accurate relationship between generated wheel force and wheel slip. This relationship will change in dependence of the tyre parameters, i.e., the relationship will be a dynamic relationship which is updated over time as the tyre wears and as the normal force $F_z$ of the tyre changes.

A tyre model of this kind can be determined by practical experimentation, analytical derivation, computer simulation, or a combination of the above. In practice, the tyre model may be represented by a look-up table (LUT) indexed by the tyre parameters, or as a set of coefficients describing a polynomial or the like. There the set of coefficients are selected based on the tyre parameters, and where the polynomial then describes the relationship between tyre behavior and vehicle state.

Other tyre models of interest may instead or as a complement model a tyre wear rate in dependence of, e.g., vehicle speed and normal load, and/or a tyre rolling resistance for a given vehicle state, which rolling resistance then depends on the particular tyre parameters of the tyre currently mounted on a given wheel. However, as previously stated the methods disclosed herein may be used independently without an existing tyre model.

An aspect of an arrangement 300 is shown in Figure 4A-B. The arrangement 300 comprises a control unit 130, 140, 150. The control unit may form part of the vehicle control unit (VCU) 130, 140 or the remote server 150 as previously been described. As will be described more in detail, the control unit may further form part of a sensor arrangement.

The arrangement 300 may further comprise a sensor arrangement comprising at least one distance sensor 110 configured to determine a measured distance between a predetermined point P1 of the vehicle 100 and the ground plane 101 supporting the vehicle 100. The predetermined point P1 of the vehicle 100 is preferably the point from which the at least one distance sensor 110 is measuring.

The distance sensor 110 can for instance be mounted on an axle of the vehicle 100 or elsewhere on the chassis of the vehicle 100. According to some aspects, as shown in Figure 4A, the distance sensor 110 is arranged parallel with a horizontal plane of the vehicle 100. In this definition, the horizontal plane of the vehicle defines its length and width. A vertical axle is arranged perpendicular to the horizontal plane, and defines the height of the vehicle. When the vehicle 100 is standing on a flat surface, the vertical axel extends up from the ground surface 101. Put in other words, the distance sensor 110 in this embodiment is arranged with an angle of 0 degrees in respect to the ground surface 101 when the vehicle 100 is standing on a flat surface.

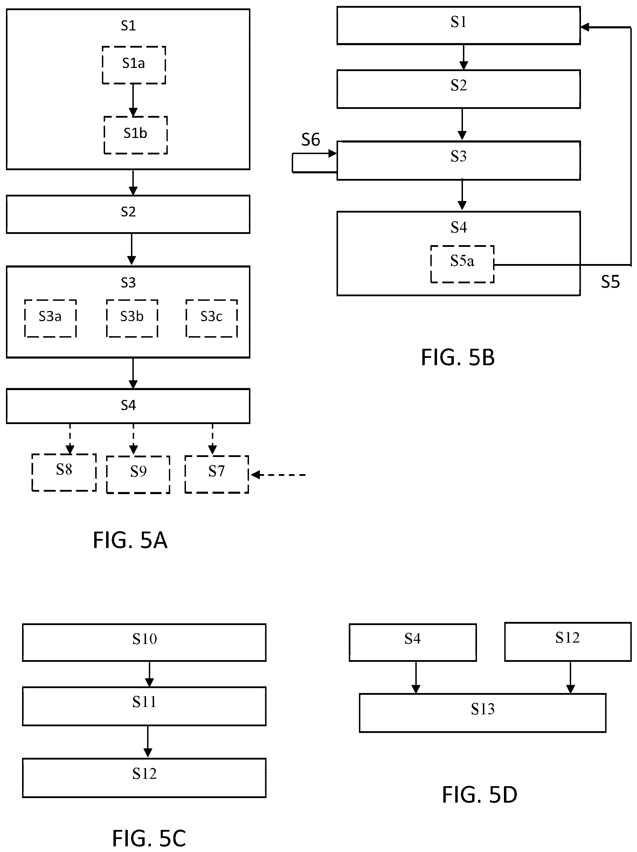

In Figure 4A, the distance signal 114 is transmitted with a known angle A1 towards the ground 101. The angle A1 is known and is preferably non-zero. The distance signal 114 is used to at least determine the distance d1 or the distance d2. In further aspects the distance signal 114 is also used to determine at least one speed component of the vehicle. This will be described more in detail with reference to Figure 5A-C.

The distance sensor 110 is preferably arranged in a direction so that the distance signal 114 is directed towards the tracks onto which the wheels of the heavy-duty vehicle 100 is to be moved.

In some aspects, as shown in Figure 4B, the distance sensor 110 is arranged at an angle between the horizontal plane and the vertical axis of the vehicle 100. The angle of the distance sensor 110 will provide a distance signal 114 having a known angle A1 towards the ground 101. The angle A1 is known and is separated from zero. Hence, in other words the distance sensor 110 is arranged with an angle with respect to the ground surface 101.

According to some aspects, the at least one distance sensor 110 is any one of an ultrasonic sensor, a radar sensor, infrared distance sensor, or a LED time-of-flight sensor. All these sensors have their respective drawback and benefits, and the preferred type used depends on the heavy-duty vehicle and its operating conditions.

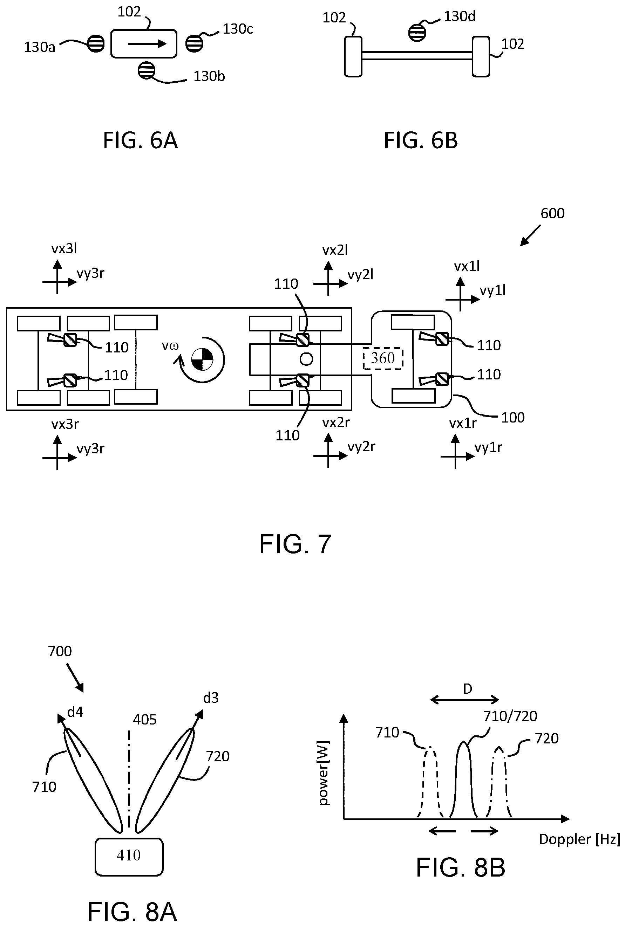

With references to Figures 6-9, embodiments where the distance sensor 110 is a radar transceiver 210 will be described even further.

Methods of determining an effective rolling radius Re of a tyre and methods for determining parameters such as wheel slip, slip angle, ground clearance, road surface roughness and road surface classification are illustrated by the flow charts in Figures 5A-C. The method may further comprise detecting a tyre blow-out event. The methods may be performed by a VCU 130, 140 in the vehicle 100, or at least in part by the remote server 150. This VCU may be implemented in a central processing unit or distributed over several units.

Figure 5A shows a method for determining at least an effective rolling radius of a tyre mounted on a heavy-duty vehicle 100. The method comprises obtaining S1 a measured distance d1 between a predetermined point P1 of the vehicle 100 and the ground plane 101 supporting the vehicle 100. The distance d1 is measured by at least one distance sensor 110. The predetermined point P1 of the vehicle 100 is preferably the point from which the at least one distance sensor 110 is measuring.

According to some aspects, the at least one distance sensor 110 is any one of an ultrasonic sensor, a radar sensor, infrared distance sensor, or LED time-of-flight sensors. All these sensors have their respective drawback and benefits, and the preferred type used depends on the heavy-duty vehicle and its operating conditions.

The method may further comprise receiving, preferably by a control unit, a distance signal 114, from the distance sensor 110, that is directed at an angle A1 between the vertical and horizontal plane of the heavy-duty vehicle 100. The angle A1 is known and is separated from zero. The method further comprises adjusting the distance measured by the distance signal 114 by compensating for the known angle A1, thereby determining the measured distance. Using the angle A1 it is possible to determine the vertical distance to the ground surface 101. The measured distance transmitted to the control unit may be the distance actually measured, or an adjusted distance that takes the angle and loaded tyre radius into account.

According to some aspects, the measured distance d1 is determined from a radar transceiver 110 as been described herein. The method may then further comprise receiving a radar signal 115 (as illustrated in Figure 8) that is directed at an angle A1 between the vertical and horizontal plane of the heavy-duty vehicle 100. The angle A1 is known and is separated from zero. The method further comprises by adjusting the distance s measured by the radar signal 115 by compensating for the known angle A1, thereby determining the measured distance d1.

The method also comprises determining S2 a loaded tyre radius $R_e$ of a tyre of the vehicle 100 at least based on the measured distance d1, d2. The loaded tyre radius is at least in part determined by knowing the distance between the tyre and the sensor. Furthermore, it is beneficial to know the relative geometry between the sensor and the tyre. In one aspect, the distance measurement is a vector with origin at the distance sensor. A linear transform is performed from the distance vector measured to the distance vector from the center of the wheel to ground. Hence, the angle of the sensor (A1 in Fig. 4) and the vertical translation of the sensor relative to the wheel axle is used to determine the loaded tyre radius $R_e$ of a tyre. The data can be obtained from a database, stored in a memory 565. In some aspects, the linear transform is determined by a calibration process. This could be performed by knowing the true wheel radius and/or distance between axle and ground, and comparing this data to measurement data.

In some aspects, the loaded tyre radius is determined based on the measured distance d1 and any of the operating parameters. More specifically, the loaded tyre radius may be determined based on the measured distance d1 and suspension parameters. This is especially beneficial when there is a non-rigid element in between the sensor and the wheel axle.

In some aspects, the loaded tyre radius is determined based on the measured distance d1 and load measurements obtained from a suspension system. The vertical stiffness and the measured load may be used to determine the difference between unloaded and loaded tyre radius. More specifically, the vertical stiffness multiplied with the measured load gives the difference between unloaded and loaded tyre radius.

In some situations the vehicle has an unknown vertical translation between the wheel axle and the sensor position. This might be the case if the vehicle 100 is arranged with bellows. The vertical translation between the wheel axle and the sensor position may be estimated by determining the bellow pressure. Hence, in some aspects the loaded tyre radius is determined based on the measured distance and the bellow pressure. In yet some aspects, the loaded tyre radius is determined based on the measured distance and data received from linear encoders that provides information on how much leaf springs have been compressed, and thus provides information relating to the vertical translation between the wheel axle and the sensor position.

The method further comprises obtaining S3 a pre-determined relationship between loaded tyre radius and effective rolling radius for the tyre. The pre-determined relationship may be part of a tyre model or as a separate relationship.

According to some aspects, the pre-determined relationship is obtained in dependence of tyre design data S3a of the tyre. The tyre design data S3a may be obtained from a memory 565 related to tyre design. The data related to tyre design S3a optionally comprises any of tyre nominal dimension, tyre structural characteristics, tyre chemical composition, and tyre history. The tyre design data may comprise configuration data relating to a tyre brand and/or model, a chemical composition of the tyre, tyre nominal dimensions, or other structural and mechanical characteristics and features of the tyre. Optionally, the data related to tyre design also comprises tyre history indicating if the tyre has been subject to any treatment or events which may have changed the behavior of the tyre. For instance, a tyre may have been subject to re-treading and/or may have been serviced in a manner which may affect its behavioral characteristics.

According to some aspects, the pre-determined relationship is obtained in dependence of input data from one or more sensors arranged to measure one or more operating parameters S3b of the tyre. The one or more sensors could be arranged in connection to the actual tyre and/or sensors arranged on the vehicle 100. These optional sensors are arranged to measure one or more operating parameters of the tyre, where the one or more operating parameters may comprise any of: vehicle speed, wheel rotation speed, tyre pressure, tyre temperature, tyre acceleration, tyre strain, tyre GPS position, weather, ambient temperature, rain classification data, normal load, slip angle, steer angle, and applied positive/negative torque to the tyre. The vehicle speed could be gained by a speed sensor, such as a GPS-sensor and/or a radar sensor.

According to some aspects, the pre-determined relationship is obtained in dependence of one or more pre-configured or estimated tyre parameters S3c. The tyre parameters could be pre-configured. However, additional advantages may be obtained if the tyre parameters are estimated or otherwise determined based on tyre data obtained from memory 565 or based on tyre data obtained from one or more sensors 510. Some of the parameters may be directly determined. For instance, a nominal tyre pressure may be directly given from a pressure sensor arranged to measure tyre pressure. Other parameters of the tyre may be estimated based on tyre data obtained from one or more sensors. For instance, tyre wear may be estimated by integrating an estimated tyre wear rate, or simply based on tyre age. The tyre parameters S3c may comprise any of: tyre wear, tyre longitudinal stiffness, tyre lateral stiffness, tyre rolling resistance, tyre peak friction, tyre contact patch properties, tyre balance properties and wheel alignment properties. The tyre parameters may optionally be estimated or regularly updated by a tyre parameter estimation software (TYPRESSW) module.

According to some aspects, the pre-determined relationship between loaded tyre radius and effective rolling radius for the tyre is obtained by parametrization. In one embodiment, a parameter space for vehicle state is set up. This space is used to parameterize the mapping from loaded tyre radius to effective tyre radius. This is preferably done using pre-configured or estimated tyre parameters S3c, operating parameters S3ba and/or tyre design data S3a. The mapping could be retrieved from a memory that could be configured at the factory site of the vehicle 100. In some embodiments the mapping is updated during service of the vehicle 100. In some aspects, the mapping can be updated in real time. In one embodiment, the mapping is updated by implementing an effective rolling radius estimator that estimates the effective rolling radius. In yet one embodiment, the mapping is updated by measuring how far the vehicle has travelled and then compare this distance to the number of wheel revolutions. The distance could be retrieved from a sensor, such as an GPS. The number of wheel revolutions could be retrieved from a sensor, such as a wheel speed sensor.

The method also comprises determining S4 the effective rolling radius of the tyre based on the determined loaded tyre radius and on the pre-determined relationship between loaded tyre radius and effective rolling radius for the tyre.

According to yet some aspects, the method further comprises determining S8 a tyre blow-out event. A blow-out event, also referred to as a burst, is a rapid, explosive loss of inflation pressure of a tyre. However, a blow-out event may also be an impact damage event where the inflation pressure is not compromised. The term blow-out event should thus be read to cover impact damage event as well.

A tyre-blow out event is preferably determined S8 by obtaining the measured distance d1 and comparing the measured distance to a range of expected differences. The method further comprises detecting a tyre blow out condition. The tyre blow out condition is preferably detected when the measured distance is outside of the range of expected differences. The tyre blow-out condition is preferably detected when the measured distance is outside of the range of expected differences for a predetermined time. The predetermined length of time is preferably set at a time allowing at least two distance readings. This increases the reliability of the determination if a tyre has suffered from blow-out. The predetermined length of time could for instance be in milliseconds or seconds, depending on the sensor providing the distance measurement.

In one aspect, the range of expected differences is in the form of a look-up table defining the highest and lowest allowable differences in distance. In an alternative aspect, the range of expected differences is defined by comparing the measured distance d1 against at least one predetermined threshold value. The range may be defined by a lower threshold value and a higher threshold value. If the measured distanced d1 is below the lower threshold value or above the higher threshold value, the measured distance is outside of the range of expected differences.

In some aspects, a feedback event is triggered if a tyre blow-out event has been detected. The feedback event may be an alarm, such as a sound, blinking lamp, or the like that signals the blow-out event to the driver. Alternatively, or additionally, the feedback event is transmitted to the vehicle control unit and the vehicle motion management.

In some aspects, the method further comprises determining S9 a ground clearance of the vehicle 100. The ground clearance, or ride height, is the distance between the base of the tyre and the lowest point of the vehicle. Put in other words, it is the shortest distance between a flat, level surface, and the lowest part of a vehicle other than those parts designed to contact the ground.

The ground clearance is determined based on at least the measured distance d1 and on a pre-determined relationship between measured distance and ground clearance of the heavy-duty vehicle. The pre-determined relationship between measured distance and ground clearance of the heavy-duty vehicle 100 may be obtained in dependence of preconfigured data stored in a memory or in dependence of a look-up table. The pre-determined relationship between measured distance and ground clearance may be obtained in dependence a vehicle dependent constant value and the loaded tyre radius determined from the measured distance d1.

In some aspects, the determined ground clearance compared against at least one predetermined ground clearance threshold value. The method may further comprise detecting an abnormality in the determined ground clearance. The abnormality is preferably detected when the determined ground clearance is outside of a range of expected differences, preferably for a predetermined time.

In one aspect, the range of expected differences is in the form of a look-up table defining the highest and lowest allowable differences in distance. In an alternative aspect, the range of expected differences is defined by comparing the determined ground clearance against at least one predetermined threshold value. The range may be defined by a lower threshold value and a higher threshold value. If the determined ground clearance is below the lower threshold value or above the higher threshold value, the determined ground clearance is outside of the range of expected differences. Hence, an abnormality in ground clearance is detected.

If an abnormality in ground clearance is detected, a feedback event may be triggered. The feedback event may be an alarm, such as a sound, blinking lamp, or the like that signals the abnormality in ground clearance to the driver. Alternatively, or additionally, the feedback event is transmitted to the vehicle control unit and the vehicle motion management.

In some aspects, the ground clearance may also, in addition the measured distance, be determined based on data received from a suspension system. The data may relate to the steering lift of the vehicle 100. When an axle is steered, e.g. the front axle, the geometry of the suspension lifts up the vehicle body from ground. All effects from suspension is known from design, and by measuring steering angles, the lifting effect can be estimated.

Now turning to Figure 5B. In some aspects, the determined effective rolling radius Re is repeatedly updated S5. Thus, preferably, the determination of the effective rolling radius is dynamic and not static. Hence, the effective rolling radius will be regularly updated to account for new measurements of distance d1 and/or updates in the pre-determined relationship between the loaded tyre radius and effective rolling radius for the tyre.

The update of the determined effective rolling radius may be based on a predetermined time scheme, for example updating the determined effective rolling radius after a specific time. The time scheme may be in seconds, minutes or hours depending on the situation. The update of the determined effective rolling radius Re may additionally or alternatively be based on the readings from the distance sensor 110. As an example, the determined effective rolling radius is updated every time a change in measured distance d1 is detected. In yet one example, the effective rolling radius is updated every time a change being over a predefined threshold value in the measured distance d1 is detected. Yet further, the update of the determined effective rolling radius may additionally or alternatively be based on changes, or updates, in the pre-determined relationship between the loaded tyre radius and effective rolling radius for the tyre. For example, the determined effective rolling radius is updated if a tyre parameter (e.g. an operating parameter) affecting the relationship is changed.

In some aspects, the pre-determined relationship between the loaded tyre radius and effective rolling radius for the tyre is repeatedly updated S6. Thus, preferably, the pre-determined relationship is dynamic and not static. Hence, the pre-determined relationship will be regularly updated to account for changes. Thus, if the tyre parameters, tyre design data or operating parameters change over time, so will the relationship in order to maintain an accurate mapping between the measured distance d1 and the effective rolling radius.

The pre-determined relationship between the loaded tyre radius and effective rolling radius for the tyre may be updated by using input data from one or more sensors. As a way of example, the relationship can be updated by a combination of GPS-data and input data from a wheel speed sensor measuring the number of wheel rotations.

This means that the pre-determined relationship between the loaded tyre radius and effective rolling radius and determined effective rolling radius will be kept up to date as the tyre progresses through its life cycle, from a new tyre to a tyre which is almost worn out and in need of replacement. Consequently, the pre-determined relationship will be more accurate compared to a pre-determined relationship which is fixedly configured. Also, the pre-determined relationship will react to misconfiguration, and remove any discrepancy between pre-configured data and actual behavior of the tyre. This will lead to a more accurate determination of the effective rolling radius.

In some aspects, the method comprises determining a reliability factor S5a of the measured distance. The reliability factor indicates if the measured distance is determined as being reliable. As soon will be described, it is beneficial if the effective rolling radius only is updated if the measured distance is reliable. In other words, if the measured distance is deemed unreliable it is preferred that the effective rolling radius is not updated based on that measurement reading. Hence, the method further comprises updating the determined effective rolling radius upon the reliability factor exceeding a predefined reliability threshold. In this case, the reliability factor indicates that the measured distance is determined as reliable. This step may be performed for a predetermined time.

The reliability factor may be obtained in dependence of previous measurement readings, preferably for a given time interval. Hence, if the measured distance d1 radically changes, this may indicate that the measurement is unreliable.

The measured distance d1 may be deemed unreliable in different situations. Some none limiting examples are in the situation of an uneven road surface, large water puddles on the road, ice and snow on the road, strong winds, oil spill on the road, strong vibrations on the vehicle, and/or error signal from sensors (e.g. error signals from bellow pressure sensors). The road surface may be uneven for many reasons, for example due to eroding roads, potholes, gravel road, dirt road, and causes difficulties in measuring an accurate distance d1.

According to some aspects, the method further comprising determining S7 a wheel slip $\lambda$ and/or slip angle $\alpha$ of the wheel. As previously discussed, slip angle $\alpha$ or sideslip angle $\alpha$, is the angle between a rolling wheel's actual direction of travel and the direction towards which it is pointing and the wheel slip $\lambda$ can be seen a speed difference measured between the wheel and the vehicle. The determination is preferably done by obtaining S7a information relating to rotational velocity $\omega_x$ of a wheel of the heavy-duty vehicle 100 as well as obtaining information of the determined effective rolling radius Re. The method further comprises determining S7b the wheel slip $\lambda$ and/or slip angle $\alpha$ of the wheel based on the rotational velocity $\omega_x$ of a wheel and on the effective rolling radius $R_e$.

Figures 5C-D illustrate further methods where additional input data, such as for example vehicle speed, is used to determine a property related to the vehicle 100. In this embodiment, the distance sensor is a radar transceiver 220 that further is configured to determine vehicle speed.

In one aspect, one single radar transceiver 220 is configured to determine a two-dimensional velocity vector. In that situation, the method comprises, in addition to the method steps S1-S4, configuring S10 the radar transceiver 220 to transmit the radar signal in a first direction and in a second direction different from the first direction. The method further comprises detecting S11 first and second radar signal components of the received radar signal based on their respective angle of arrival (AoA). The first radar signal component has an AoA corresponding to the first direction and the second radar signal component has an AoA corresponding to the second direction. The method further comprises determining S12 a two-dimensional velocity vector of the heavy-duty vehicle 100 based on respective Doppler frequencies of the first and second radar signal components.

In yet one aspect, two radar transceivers 220 are configured to determine a two-dimensional velocity vector based on input from both transceivers. In that situation, the method comprises, in addition to the method steps S1-S4, configuring the first radar transceiver 220 to transmit the radar signal in a first direction and configuring the second radar transceiver 220 to transmit the radar signal in a second direction different from the first direction. The method further comprises detecting first and second radar signal components of the received radar signals based on their respective AoA. The first radar signal component has an AoA corresponding to the first direction and the second radar signal component has an AoA corresponding to the second direction. The method further comprises determining a two-dimensional velocity vector of the heavy-duty vehicle 100 based on respective Doppler frequencies of the first and second radar signal components.

In one aspect, the method further comprises determining S13 a prediction and/or estimation of a road surface roughness and/or road surface classification. This is determined at least based on the measured distance d1 and the vehicle speed. The vehicle speed may be obtained by the one or more sensors 110, preferably a radar transceiver 220 as previously been described. The vehicle speed is preferably obtain by the method steps S10-S12.

In a preferred aspect, determining a prediction and/or estimation of a road surface roughness is at least based on the measured distance d1, the vehicle speed and sequence of distance data.

It is appreciated that the methods steps discussed above in connection to Figures 5A-D can be freely combined.

In the following, the description will be directed at embodiments where the distance sensor 110 is a radar transceiver 220. More specifically, the radar is a radar directed towards the ground plane 101 supporting the vehicle, also referred to as the ground surface. In some aspects, the radar transceiver is a ground penetrating radar.

In one aspect, a radar transceiver is preferably used to determine the distance d1. However, using a radar transceiver further has the benefit that the same radar transceiver could be used also for determining the velocity of the vehicle.

In a preferred embodiment the radar transceiver is configured to determine both the distance d1 to the ground, as well as both longitudinal and lateral velocity of the vehicle 100 with respect to a ground plane or road surface 101 supporting the vehicle 100, preferably in a two-dimensional velocity vector $[v_x, v_y]$ of a heavy-duty vehicle 100.

This type of radar system comprises at least one radar transceiver arranged to transmit and to receive a radar signal 115 via an antenna array or a feed antenna. The radar system could either consists of one single transceiver used to determine velocity in two dimensions, or two separate radar transceivers for each dimension.

The radar transceiver illuminates a small portion of the road surface, as illustrated in the illustrations in Fig. 6A-B. Various illumination patterns can be selected, but it is an advantage if the illuminated portion of the ground surface by a given radar transceiver is close to a wheel and relatively small in size. As shown in Figure 6A-B, the illuminated portion of ground plane 101 can be directly behind 130a the contact patch of a wheel 102, to the side 130b of the contact patch of the wheel 102, or in front 130c of the contact patch of the wheel 102. An illuminated portion of ground plane 130d can also be centered on an axle, as shown to the right. The illuminated portion of ground plane is preferably within 1 m of the contact patch of a wheel, since this allows a better idea of how the wheel is moving relative to the road surface. The illuminated portion of ground plane is even more preferably within 0.5 m of the contact patch of a wheel.

The at least one radar transceiver is arranged to transmit a radar signal over a radar bandwidth, where a larger bandwidth improves range resolution in a known manner. Velocity resolution depends on the radar wavelength and the repetition period of the waveform in a known manner. According to some aspects, the transceiver is arranged to transmit a frequency modulated continuous wave (FMCW) radar signal over the radar bandwidth, where a frequency chirp is swept over the radar bandwidth in cycles. Other types of radar signal formats may also be used, such as band-spread radar signals where orthogonal codes are used to spread a modulated signal over a wide frequency band, or an orthogonal frequency division multiplexed (OFDM) radar signal. Given an FMCW radar signal format, the distance to the ground plane 101 (and also to reflecting material under the road surface) may be determined based on a first Discrete Fourier Transform (DFT), or Fast Fourier Transform (FFT), and the radial velocity or Doppler frequency of the illuminated portion of ground may be determined based on a second DFT or FFT, in a known manner. The result of applying a range FFT and a Doppler FFT is often denoted a range-Doppler map or R-D map for short. A range-Doppler map is a matrix of complex values, where each column index corresponds to backscatter energy received at a given radar antenna from reflections at a given range, and where each row index corresponds to radar backscatter energy received at a given radar antenna from reflections at a given radial velocity relative to the position of the radar transceiver. A good overview of rudimentary FMCW radar processing is given in the lecture notes "Introduction to mmwave Sensing: FMCW Radars" by Sandeep Rao, Texas Instruments, 2017. The Doppler frequency at the range corresponding to the distance between the radar transceiver and ground is indicative of the radial speed at which the ground moves relative to the radar transceiver, as explained in US 2004/0138802.

As previously described, determining the speed in both longitudinal and lateral velocity of the vehicle 100 could be achieved either by one radar transceiver transmitting a radar signal in two directions, or by two radar transceivers each transmitting in one direction.

In the following, the description will be focused on the aspect where only one radar transceiver is used to determine the distance d1 and the speed in both longitudinal and lateral velocity of the vehicle 100. In such instance, the radar transceiver is configured to emit the radar signal 115 in a first direction d4 and in a second direction d3 different from the first direction. This means that the radar signal illuminates the ground plane 101 in at least two directions. This can be done by illuminating a larger area of the road surface by a relatively broad antenna beam, or by illuminating two or more separate sections of the ground plane or road surface 101 by a plurality of more narrow beams.

As previously touched upon with reference to Fig. 4-B, the radar transceiver(s) 220 may be mounted to the vehicle chassis such that both the first direction and the second direction points towards the ground, but in different directions. Since the radar illuminates the ground in at least two different directions, it is able to receive backscattered radar signals from two or more different directions. When the radar transceiver(s) 220 are mounted on the chassis, it may be beneficial if the predetermined relationship between loaded tyre radius and effective rolling radius is obtained in dependence of data relating to the suspension system, for example from suspension level sensors. Alternatively, the determination of the loaded tyre radius is based on both the measured distance as well as data received from the suspension system.

As previously touched upon with reference to Fig. 4-B, the radar transceiver(s) 220 may be mounted to the vehicle axis.

The heavy-duty vehicle 100 may be arranged with a plurality of radar transceivers distributed over the length of the vehicle. This is schematically illustrated in Figure 7. In the illustration the vehicle 100 is a heavy-duty vehicle 100 with a towing truck configured to tow a trailer unit where the vehicle 100 comprises a system 600 of radar transceivers 110 distributed over the heavy-duty vehicle 100.

The radar transceiver, or a radar module comprising said transceiver, may further comprises a processing device arranged to detect first and second radar signal components of the received radar signal 115 based on their respective angle of arrival (AoA) according to the techniques discussed above, where the first radar signal component has an AoA corresponding to the first direction and the second radar signal component has an AoA corresponding to the second direction. The processing device is arranged to determine the two-dimensional velocity vector of the heavy-duty vehicle 100 based on respective Doppler frequencies of the first and second radar signal components. Thus, to summarize, the radar transceiver illuminates one or more portions of the road surface under the vehicle, and receives backscattered energy from the road surface from two directions. The radial velocity of the road surface in the two different directions will be indicative of the velocity of the vehicle in two dimensions. For instance, if the first direction is a longitudinal direction of the vehicle 100 and the second direction is a lateral direction of the vehicle 100, then the Doppler information of the first and the second radar signal components will be directly indicative of the vehicle longitudinal and lateral speeds. The radar transceiver can also be mounted together with a steered wheel, and turn as the wheel is steered, which means that the velocity components will be determined in the coordinate system of the wheel without need for mathematical transforms from a vehicle coordinate system into the coordinate system of the wheel.

If the two directions and are pointing in some other direction compared to the vehicle longitudinal and lateral directions, then a transform may be required in order to obtain the vehicle speed in longitudinal and lateral directions. This transform is straight forward and will therefore not be discussed in more detail herein.

Particular advantages when it comes to determining vehicle lateral speed can be obtained if the first direction and the second direction are configured on respective sides of a bore sight direction of the radar module configured to be aligned with a longitudinal direction of the vehicle. In this case the processing device can detect a lateral velocity component of the vehicle based on a difference of the respective Doppler frequencies of the first and second radar signal components.

Figures 8A and 8B illustrate the concept, where Figure 8A is a top view of an example radar system mounted to a heavy-duty vehicle 100.In Figure 8A the radar system has been mounted to the vehicle 100 such that its bore sight direction 405 coincides with the longitudinal direction of the vehicle 100. In this specific example the radar transceiver comprises an antenna array. Figure 8B shows example signal powers of the radar signals received from the different directions d4 and d3. Now, if the vehicle is travelling in the bore sigh direction 405, i.e., if there is no lateral motion, then the radial motion of the road surface will be equal for the two directions. I.e., the Doppler frequency of the signal component received by focusing the antenna array 410 as indicated by the antenna lobe 710 will be the same as that obtained when focusing the antenna array 410 as indicated by the antenna lobe 720. Any lateral velocity of the vehicle will give an unbalance in the Doppler frequencies of the two antenna lobes 710, 720, i.e., the Doppler frequency measured in the first direction d4 will differ from the Doppler frequency measured in the second direction d3. If the radar component signal power is plotted vs Doppler frequency, as schematically indicated in Figure 8B, then a vehicle travelling along the bore sight direction will show radar signal components having Doppler frequencies which are the same or at least similar. A lateral velocity will give rise to a difference D in Doppler frequency for the first direction d4 and the second direction d3, as shown in Figure 8B. This difference in Doppler frequency is indicative of the lateral velocity of the vehicle with respect to the ground 101.

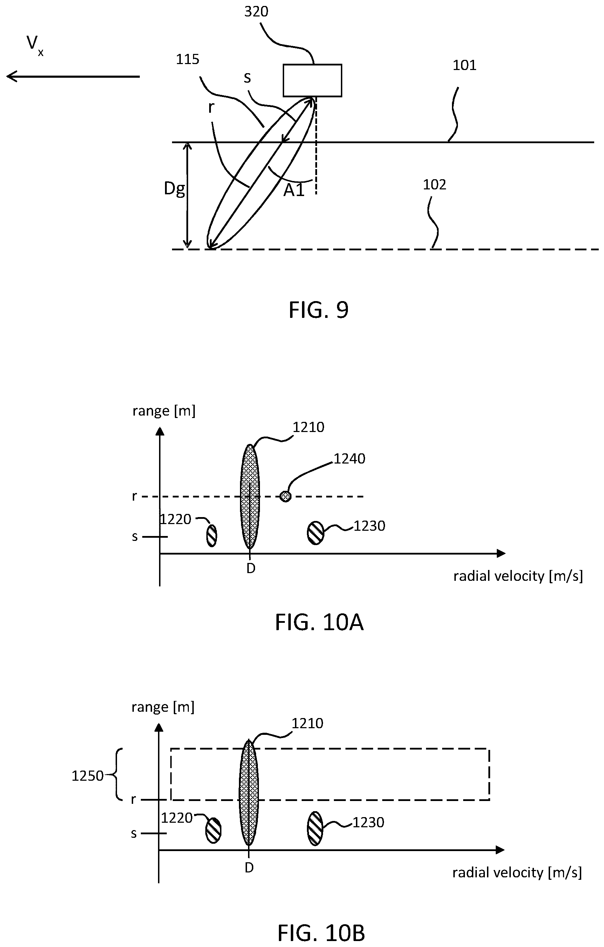

In one aspect, as illustrated in Figure 9 the distance sensor is a ground-penetrating radar transceiver 320 which can be used to determine vehicle speed over ground regardless of the surface conditions, i.e., regardless of whether the road surface is smooth or scattering radar signals, and regardless of whether there is reflective matter on the road surface which moves relative to the road surface. The reason is that the radar transceiver has a transmission lobe which penetrates the road surface 101 and extends beyond the road surface. Thus, there are radar reflections generated also from points below the actual road surface, such as in the plane 102 which lies a distance Dg below the road surface 101. In the example of Figure 9, the transmission lobe intersects the plane 102 at range r, while the road surface 101 is at a distance s (smaller than r) from the radar transceiver 1160 along the direction of the main transmission lobe. The reflections from this point below the surface can normally be guaranteed to be stable and to provide a good foundation for establishing the vehicle speed over ground, regardless of any moving matter at the road surface 101.

According to some aspects, the plane 102 is a road foundation layer which is associated with relatively strong scattering. The actual distance r at which the speed over ground is determined is not so important, as long as it is below the surface 101, away from the matter which may be moving there and cause errors in the determination of the speed over ground.

The radar transceiver is advantageously configured with a boresight direction of a transmission lobe in the longitudinal direction of the vehicle that intersects the road surface 101 at an angle A1, as shown in Figure 9. This angle a may vary from implementation to implementation, but a value between 30-70 degrees has been found to give satisfactory results, and preferably about 45 degrees. It is noted that the radar transceiver 320 will detect relative velocity in its radial direction only, and not see the tangential component of the relative velocity between radar transceiver and a detected target. Thus, depending on the angle a, a compensation is necessary:

$$v_x = F_D \, sin(a)$$

where $F_D$ is the radial velocity determined from the Doppler frequency of the target point under the road surface. The radar signal processing involved in determining relative speed from received radar reflections is generally known and will not be discussed in more detail herein. The techniques described in, e.g., EP1739451 A1 can be applied with advantage to determine $F_D$.

The radar transceiver 320 is preferably configured with a transmission lobe azimuth angular width below ten degrees, and preferably below five degrees, i.e., a relatively narrow beam. This narrow beam decreases the amount of reflections received from the ambient environment and from the vehicle itself, and therefore simplifies detecting the Doppler frequency associated with the point under the road surface 101.

The carrier frequency of the radar transceivers discussed herein is preferably in the GHz range, such as above 30 GHz and preferably around 80 GHz or so. The reason for preferring this high carrier frequency is the small wavelength which allows scattering even from relatively smooth surfaces and/or homogenous materials. The small wavelength also improves the velocity resolution of the proposed techniques.

Figure 10A schematically illustrates an example range-Doppler map of a received radar signal. Range-Doppler maps are generally known to visualize received radar echoes based on the range to the target and the radial velocity of the target relative to the radar transceiver (determined from the Doppler shift on the received signal relative to the transmitted signal in a known manner). A range-Doppler map allows a receiver to separate radar detections which are at different ranges from the radar transceiver and/or are moving with different radial velocities relative to the radar transceiver. To determine the radial motion velocity of the point 1210 relative to the radar transceiver, a control unit only has to read out the Doppler frequency at the specified range r. Due to the azimuth width and the direction of the main transmission lobe, the reflections from the point 1210 will normally dominate over other weaker reflections, at least if averaged over some short period of time.

Figure 10A illustrates a common situation where there are several detections 1210, 1220, 1230 at ranges close to the road surface, i.e., around the range s. Hence, it is difficult to know which of the detections that indicate the true vehicle speed over ground. However, all detections 1210 in the transmission lobe at ranges around the range r, corresponding to the point under the road surface, is normally free from clutter. To find the speed over ground, the strongest detection at some range r greater than the range s is first found. The Doppler frequency (or, equivalently, the radial relative velocity D) associated with this detection is then used to determine the speed over ground of the vehicle. If there is more than one Doppler frequency bin with non-negligible detection energy, i.e., more than one radar detection 1210, 1240 at the specified range r, then a weighted sum can be formed to estimate the radial velocity. The weights can be determined based on the energy in each Doppler frequency bin. The strongest detection at the specified range r can also be selected, since it is most likely that the strongest detection corresponds to the desired radial velocity.

The range r at which the Doppler value is determined can advantageously be determined relative to the road surface, say about 10 cm beyond the range to the road surface, i.e., according to some aspects

$$r = s + \Delta \; [\mathrm{m}]$$

where $\Delta$ is the positive offset value added to s to obtain r. This means that the actual range r changes continuously to follow, e.g., motion of the vehicle along a normal vector to the road surface, but stays more or less at the same distance relative to the road surface 101. The road surface at distance s is often visible as a strong reflection, although the Doppler content at this range s may comprise more than one component due to clutter as discussed above. Thus, according to some aspects, the radar transceiver may first detect the distance s from the radar transceiver 320 to the road surface along the pointing direction of the antenna transmission lobe and then determine the distance r to the point of interest below the road surface 101 relative to the road surface distance s, e.g., by adding a predetermined positive offset $\Delta$ to the detected distance s as discussed above. According to other aspects, the radar transceiver 160 may just determine the distance Dg below the road surface 101 as a pre-determined distance from the radar transceiver 320. In this case any suitable distance r may be selected as long as it is larger than the distance s.

To improve accuracy further, the radar transceiver 320 may be configured to receive data indicative of a vehicle height over ground, or a height over ground of the radar transceiver 320. This type of data may, e.g., be obtained from a linear position sensor configured in connection to the vehicle suspension, such as a suspension system sensor. Thus, as the vehicle moves up and down along a normal to the road surface, the detected Doppler frequency can be adjusted to account for the motion, which improves the estimated speed over ground in the longitudinal direction.

Figure 10B illustrates another example range-Doppler map. In this case the radar transceiver 320 detects the Doppler frequency associated with the target point as an average Doppler frequency associated with a range of distances corresponding to a volume below the road surface. Alternatively, the radar transceiver 320 may perform a weighted combination of the strongest detections in the range 1250 to determine the Doppler frequency from which vehicle speed over ground is determined, where the weights can be configured as a function of detection strength.

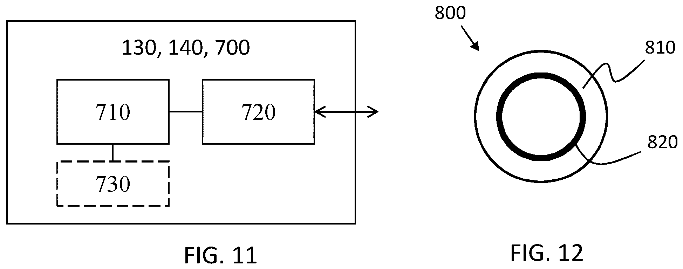

Figure 11 schematically illustrates, in terms of a number of functional units, the components of a control unit 700 according to embodiments of the discussions herein, such as any of the VUCs 130, 140. This control unit 700 may be comprised in the heavy-duty vehicle 100. Processing circuitry 710 is provided using any combination of one or more of a suitable central processing unit CPU, multiprocessor, microcontroller, digital signal processor DSP, etc., capable of executing software instructions stored in a computer program product, e.g. in the form of a storage medium 730. The processing circuitry 710 may further be provided as at least one application specific integrated circuit ASIC, or field programmable gate array FPGA.

Particularly, the processing circuitry 710 is configured to cause the control unit 700 to perform a set of operations, or steps, such as the methods discussed in connection to Figure 5A-D. For example, the storage medium 730 may store the set of operations, and the processing circuitry 710 may be configured to retrieve the set of operations from the storage medium 730 to cause the control unit 700 to perform the set of operations. The set of operations may be provided as a set of executable instructions. Thus, the processing circuitry 710 is thereby arranged to execute methods as herein disclosed.

The storage medium 730 may also comprise persistent storage, which, for example, can be any single one or combination of magnetic memory, optical memory, solid state memory or even remotely mounted memory.

The control unit 700 may further comprise an interface 720 for communications with at least one external device. As such the interface 720 may comprise one or more transmitters and receivers, comprising analogue and digital components and a suitable number of ports for wireline or wireless communication.

The processing circuitry 710 controls the general operation of the control unit 700, e.g., by sending data and control signals to the interface 720 and the storage medium 730, by receiving data and reports from the interface 720, and by retrieving data and instructions from the storage medium 730. Other components, as well as the related functionality, of the control node are omitted in order not to obscure the concepts presented herein.

Figure 12 illustrates a computer readable medium 810 carrying a computer program comprising program code means 820 for performing the methods illustrated in Figures 5A-D, when said program product is run on a computer. The computer readable medium and the code means may together form a computer program product 800.

**Claims**

1. A computer implemented method for determining at least an effective rolling radius ($R_e$) of a tyre (230) mounted on a heavy-duty vehicle (100), the method comprising:

   determining (S1) a measured distance between a predefined point (P1) of the vehicle (100) and a ground plane (101) supporting the vehicle (100), determining (S2) a loaded tyre radius of a tyre of said vehicle (100) at least based on said measured distance, obtaining (S3) a pre-determined relationship between loaded tyre radius and effective rolling radius for the tyre, and determining (S4) the effective rolling radius ($R_e$) of the tyre based on the determined loaded tyre radius and on the pre-determined relationship between loaded tyre radius and effective rolling radius for the tyre.

2. The computer implemented method according to claim 1, wherein the pre-determined relationship is obtained in dependence of tyre design data (S3a) of the tyre obtained from a memory (565) related to tyre design.

3. The computer implemented method according to claim 2, wherein the data related to tyre design (S3a) comprises any of: tyre nominal dimension, tyre structural characteristics, tyre chemical composition, tyre history.

4. The computer implemented method according to any of the preceding claims, wherein the pre-determined relationship is obtained in dependence of input data from one or more sensors (510) arranged to measure one or more operating parameters (S3b) of the tyre.

5. The computer implemented method according to claim 4, wherein the one or more operating parameters (S3b) comprise any of: vehicle speed, wheel rotation speed, tyre pressure, tyre temperature, tyre acceleration, tyre strain, tyre GPS position, weather, ambient temperature, rain classification data, normal load, slip angle $\alpha$, steer angle, wheel load measurement, axle load measurement, applied torque and suspension parameters.

6. The computer implemented method according according to any of the preceding claims, wherein the pre-determined relationship is obtained in dependence of one or more estimated tyre parameters (S3c) that comprise any of: tyre wear, tyre longitudinal stiffness, tyre lateral stiffness, tyre rolling resistance, tyre peak friction, tyre contact patch properties, tyre balance properties and wheel alignment properties.

7. The computer implemented method according to any of the preceding claims, wherein the measured distance (d1) is determined by:

   receiving (S1a) a radar signal (115), from at least one radar transceiver (220), directed at an known angle (A1) between the vertical and horizontal plane of the heavy-duty vehicle (100), determining (S1b) the measured distance (d1) by adjusting the distance (s) measured by the radar signal (115) by compensating for the known angle (A1).

8. The computer implemented method according to any of the preceding claims, further comprising repeatedly updating (S5, S6) the determined effective rolling radius and/or repeatedly updating the pre-determined relationship between the loaded tyre radius and the effective rolling radius of the tyre.

9. The computer implemented method according to any one of claims 1 - 7, further comprising:

   determining a reliability factor (S5a) of the measured distance, and updating (S5) the determined effective rolling radius upon the reliability factor exceeding a predefined reliability threshold indicating that the measured distance is determined as reliable.

10. The method according to any of the preceding claims, further comprising determining (S7) a wheel slip ($\lambda$) and/or slip angle ($\alpha$) of the wheel by:

    obtaining (S7a) information relating to rotational velocity ($\omega_x$) of a wheel of the heavy-duty vehicle (100), determining (S7b) the wheel slip ($\lambda$) and/or slip angle ($\alpha$) of the wheel based on the rotational velocity ($\omega_x$) of a wheel and on the effective rolling radius (Re).

11. A computer program (820) comprising program code means for performing the steps of any of claims 1-12 when said program is run on a computer or on processing circuitry (810) of a control unit (700).

12. A computer readable medium (810) carrying a computer program (820) comprising program code means for performing the steps of any of claims 1-12 when said program product is run on a computer or on processing circuitry (810) of a control unit (700).

13. An arrangement for determining at least an effective rolling radius of a tyre mounted on a heavy-duty vehicle (100), comprising:
a control unit (130; 140; 700) configured to:

determine a measured distance (d1) between a predefined point of the vehicle (100) and a ground plane (101) supporting the vehicle (100), determine a loaded tyre radius of a tyre of said vehicle (100) at least based on said measured distance (d1),
obtain a pre-determined relationship between loaded tyre radius and effective rolling radius for the tyre, and
determine the effective rolling radius $(R_e)$ of the tyre based on the determined loaded tyre radius and on the pre-determined relationship between loaded tyre radius and effective rolling radius for the tyre.

14. A heavy-duty vehicle (100) comprising the arrangement according to claim 13.

15. The heavy-duty vehicle (100) according to claim 14, wherein the arrangement comprises at least one radar transceiver arranged to transmit and to receive a radar signal (115), wherein said at least one radar transceiver is arranged in a direction towards the tracks onto which the wheels of the heavy-duty vehicle (100) is to be moved.

**Patentansprüche**

1. Computerimplementiertes Verfahren zum Bestimmen von mindestens einem effektiven Rollradius $(R_e)$ eines Reifens (230), der an einem Schwerlastfahrzeug (100) montiert ist, das Verfahren umfassend:

Bestimmen (S1) eines gemessenen Abstands zwischen einem vordefinierten Punkt (P1) des Fahrzeugs (100) und einer Bodenebene (101), die das Fahrzeug (100) trägt,
Bestimmen (S2) eines belasteten Reifenradius eines Reifens des Fahrzeugs (100) zumindest basierend auf dem gemessenen Abstand,
Bestimmen (S3) eines vorbestimmten Verhältnisses zwischen dem belasteten Reifenradius und dem effektivem Rollradius für den Reifen, und
Bestimmen (S4) des effektiven Rollradius $(R_e)$ des Reifens basierend auf dem bestimmten belasteten Reifenradius und dem vorbestimmten Verhältnis zwischen dem belasteten Reifenradius und dem effektiven Rollradius für den Reifen.

2. Computerimplementiertes Verfahren nach Anspruch 1, wobei das vorbestimmte Verhältnis abhängig von Reifenkonstruktionsdaten (S3a) des Reifens erlangt wird, die aus einem Speicher (565) bezüglich Reifenkonstruktion erlangt werden.

3. Computerimplementiertes Verfahren nach Anspruch 2, wobei die Daten bezüglich Reifenkonstruktion (S3a) beliebige von Folgenden umfassen: Reifennennabmessungen, Reifenstruktureigenschaften, chemische Reifenzusammensetzung, Reifenhistorie.

4. Computerimplementiertes Verfahren nach einem der vorherigen Ansprüche, wobei das vorbestimmte Verhältnis abhängig von Eingangsdaten eines oder mehrerer Sensoren (510) erlangt wird, die zum Messen eines oder mehrerer Betriebsparameter (S3b) des Reifens angeordnet sind.

5. Computerimplementiertes Verfahren nach Anspruch 4, wobei ein oder mehrere Betriebsparameter (S3b) Folgendes umfassen: Fahrzeuggeschwindigkeit, Raddrehzahl, Reifendruck, Reifentemperatur, Reifenbeschleunigung, Reifendehnung, GPS-Position des Reifens, Wetter, Umgebungstemperatur, Regenklassifizierungsdaten, Normallast, Schlupfwinkel $\alpha$, Lenkwinkel, Radlastmessung, Achslastmessung, angelegtes Drehmoment und Aufhängungsparameter.

6. Computerimplementiertes Verfahren nach einem der vorherigen Ansprüche, wobei das vorbestimmte Verhältnis abhängig von einem oder mehreren geschätzten Reifenparametern (S3c) erlangt wird, die eines oder mehrere von Folgenden umfassen: Reifenverschleiß, Längssteifigkeit, Seitensteifigkeit, Rollwiderstand, maximaler Reibwert, Eigenschaften der Reifenaufstandsfläche, Reifenauswuchteigenschaften und Radausrichtungseigenschaften.

7. Computerimplementiertes Verfahren nach einem der vorherigen Ansprüche, wobei der gemessene Abstand (d1) wie folgt bestimmt wird:

Empfangen (S1a) eines Radarsignals (115) von mindestens einem Radar-Sendeempfänger (220), der in einem bekannten Winkel (A1) zwischen der vertikalen und der horizontalen Ebene des Schwerlastfahrzeugs (100) ausgerichtet ist,
Bestimmen (S1b) des gemessenen Abstands (d1) durch Anpassen des von dem Radarsignal (115) gemessenen Werts (s) mittels Kompensation des bekannten Winkels (A1).

8. Computerimplementiertes Verfahren nach einem der vorherigen Ansprüche, ferner umfassend ein wiederholtes Aktualisieren (S5, S6) des bestimmten effektiven Rollradius und/oder ein wiederholtes Aktualisieren des vorbestimmten Verhältnisses zwischen dem belasteten Reifenradius und dem effektiven Rollradius des Reifens.

9. Computerimplementiertes Verfahren nach einem der Ansprüche 1-7, ferner umfassend:

Bestimmen eines Zuverlässigkeitsfaktors (S5a) des gemessenen Abstands, und
Aktualisieren (S5) des bestimmten effektiven Rollradius, wenn der Zuverlässigkeitsfaktor einen vordefinierten Zuverlässigkeitsschwellenwert überschreitet, der angibt, dass der gemessene Abstand als zuverlässig bestimmt wird.

10. Verfahren nach einem der vorherigen Ansprüche, ferner umfassend ein Bestimmen (S7) eines Radschlupfs ($\lambda$) und/oder eines Schräglaufwinkels ($\alpha$) des Rads durch:

Erlangen (S7a) von Informationen bezüglich Drehgeschwindigkeit ($\omega_x$) eines Rads des Schwerlastfahrzeugs (100),
Bestimmen (S7b) des Radschlupfs ($\lambda$) und/oder des Schlupfwinkels ($\alpha$) des Rads basierend auf der Drehgeschwindigkeit ($\omega_x$) und dem effektiven Rollradius ($R_e$).

11. Computerprogramm (820), umfassend Programmcodeeinrichtungen zum Durchführen der Schritte nach einem der Ansprüche 1-12, wenn das Programm auf einem Computer oder auf einer Verarbeitungsschaltung (810) einer Steuereinheit (700) ausgeführt wird.

12. Computerlesbares Medium (810), das ein Computerprogramm (820) trägt, umfassend Programmcodeeinrichtungen zum Durchführen der Schritte nach einem der Ansprüche 1-12, wenn das Programmprodukt auf einem Computer oder auf einer Verarbeitungsschaltung (810) einer Steuereinheit (700) ausgeführt wird.

13. Anordnung zum Bestimmen mindestens eines effektiven Rollradius eines Reifens, der an einem Schwerlastfahrzeug (100) montiert ist, umfassend:
eine Steuereinheit (130; 140; 700), die zu Folgendem konfiguriert ist:

Bestimmen eines gemessenen Abstands (d1) zwischen einem vordefinierten Punkt des Fahrzeugs (100) und einer Bodenebene (101), die das Fahrzeug (100) trägt,
Bestimmen eines belasteten Reifenradius eines Reifens des Fahrzeugs (100) zumindest basierend auf dem gemessenen Abstand (d1),
Erlangen eines vorbestimmten Verhältnisses zwischen dem belasteten Reifenradius und dem effektivem Rollradius für den Reifen, und
Bestimmen des effektiven Rollradius ($R_e$) des Reifens basierend auf dem bestimmten belasteten Reifenradius und dem vorbestimmten Verhältnis zwischen dem belasteten Reifenradius und dem effektiven Rollradius für den Reifen.

14. Schwerlastfahrzeug (100), umfassend die Anordnung nach Anspruch 13.

15. Schwerlastfahrzeug (100) nach Anspruch 14, wobei die Anordnung mindestens einen Radar-Sendeempfänger umfasst, der angeordnet ist, um ein Radarsignal (115) zu senden und zu empfangen, wobei der mindestens eine Radar-Sendeempfänger in Richtung der Spuren angeordnet ist, auf denen die Räder des Schwerlastfahrzeugs (100) bewegt werden sollen.

**Revendications**

1. Procédé mis en œuvre par ordinateur pour déterminer au moins un rayon de roulement effectif ($R_e$) d'un pneu (230) monté sur un véhicule utilitaire lourd (100), le procédé comprenant :

la détermination (S1) d'une distance mesurée entre un point prédéfini (P1) du véhicule (100) et un plan de sol (101) supportant le véhicule (100),
la détermination (S2) d'un rayon de pneu chargé d'un pneu dudit véhicule (100) au moins sur la base de ladite distance mesurée,
l'obtention (S3) d'une relation prédéterminée entre le rayon de pneu chargé et le rayon de roulement effectif pour le pneu, et
la détermination (S4) du rayon de roulement effectif ($R_e$) du pneu sur la base du rayon de pneu chargé déterminé et de la relation prédéterminée entre le rayon de pneu chargé et le rayon de roulement effectif pour le pneu.

2. Procédé mis en œuvre par ordinateur selon la revendication 1, dans lequel la relation prédéterminée est obtenue en fonction des données de conception de pneu (S3a) du pneu obtenues à partir d'une mémoire (565) relative à la conception du pneu.

**3.** Procédé mis en œuvre par ordinateur selon la revendication 2, dans lequel les données relatives à la conception de pneu (S3a) comprennent l'un quelconque des éléments suivants : la dimension nominale du pneu, les caractéristiques structurelles du pneu, la composition chimique du pneu, l'historique du pneu.

**4.** Procédé mis en œuvre par ordinateur selon l'une quelconque des revendications précédentes, dans lequel la relation prédéterminée est obtenue en fonction de données d'entrée provenant d'un ou de plusieurs capteurs (510) agencés pour mesurer un ou plusieurs paramètres de fonctionnement (S3b) du pneu.

**5.** Procédé mis en œuvre par ordinateur selon la revendication 4, dans lequel les un ou plusieurs paramètres de fonctionnement (S3b) comprennent l'un quelconque des éléments suivants : vitesse du véhicule, vitesse de rotation des roues, pression des pneumatiques, température des pneumatiques, accélération des pneumatiques, déformation des pneumatiques, position GPS des pneumatiques, conditions météorologiques, température ambiante, données de classification de la pluie, charge normale, angle de patinage $\alpha$, angle de braquage, mesure de la charge par roue, mesure de la charge par essieu, couple appliqué et paramètres de suspension.

**6.** Procédé mis en œuvre par ordinateur selon l'une quelconque des revendications précédentes, dans lequel la relation prédéterminée est obtenue en fonction d'un ou plusieurs paramètres de pneumatique estimés (S3c) qui comprennent l'un quelconque des éléments suivants : usure du pneumatique, rigidité longitudinale du pneumatique, rigidité latérale du pneumatique, résistance au roulement du pneumatique, frottement maximal du pneumatique, propriétés de la zone de contact du pneumatique, propriétés de l'équilibre du pneumatique et propriétés de l'alignement de la roue.

**7.** Procédé mis en œuvre par ordinateur selon l'une quelconque des revendications précédentes, dans lequel la distance mesurée (d1) est déterminée par :

la réception (S1a) d'un signal radar (115) provenant d'au moins un émetteur-récepteur radar (220), dirigé vers un angle connu (A1) entre le plan vertical et le plan horizontal du véhicule utilitaire lourd (100),
la détermination (S1b) de la distance mesurée (d1) en ajustant la distance (s) mesurée par le signal radar (115) en compensant l'angle connu (A1).

**8.** Procédé mis en œuvre par ordinateur selon l'une quelconque des revendications précédentes, comprenant en outre l'actualisation répétée (S5, S6) du rayon de roulement effectif déterminé et/ou l'actualisation répétée de la relation prédéterminée entre le rayon de pneu chargé et le rayon de roulement effectif du pneu.

**9.** Procédé mis en œuvre par ordinateur selon l'une quelconque des revendications 1 à 7, comprenant en outre :

la détermination d'un facteur de fiabilité (S5a) de la distance mesurée, et
l'actualisation (S5) du rayon de roulement effectif déterminé lorsque le facteur de fiabilité dépasse un seuil de fiabilité prédéfini indiquant que la distance mesurée est déterminée comme fiable.

**10.** Procédé selon l'une quelconque des revendications précédentes, comprenant en outre la détermination (S7) d'un glissement de roue ($\lambda$) et/ou d'un angle de glissement ($\alpha$) de la roue par :

l'obtention (S7a) d'informations relatives à la vitesse de rotation ($\omega_x$) d'une roue du véhicule utilitaire lourd (100),
la détermination (S7b) du glissement de roue ($\lambda$) et/ou de l'angle de glissement ($\alpha$) de la roue sur la base de la vitesse de rotation ($\omega_x$) d'une roue et du rayon de roulement effectif (Re).

**11.** Programme informatique (820) comprenant des moyens de code de programme pour exécuter les étapes selon l'une quelconque des revendications 1 à 12 lorsque ledit programme est exécuté sur un ordinateur ou sur un circuit de traitement (810) d'une unité de commande (700).

**12.** Support lisible par ordinateur (810) contenant un programme informatique (820) comprenant des moyens de code de programme pour exécuter les étapes selon l'une quelconque des revendications 1 à 12 lorsque ledit produit de programme est exécuté sur un ordinateur ou sur un circuit de traitement (810) d'une unité de commande (700).

**13.** Agencement pour déterminer au moins un rayon de roulement effectif d'un pneu monté sur un véhicule utilitaire lourd (100), comprenant :
une unité de commande (130 ; 140 ; 700) configurée pour :

déterminer une distance mesurée (d1) entre un point prédéfini du véhicule (100) et un plan de sol (101) supportant le véhicule (100),
déterminer un rayon de pneu chargé d'un pneu dudit véhicule (100) au moins sur la base de ladite distance mesurée (d1),
obtenir une relation prédéterminée entre le rayon de pneu chargé et le rayon de roulement effectif pour le pneu, et
déterminer le rayon de roulement effectif ($R_e$) du pneu sur la base du rayon de pneu chargé déterminé et de la relation prédéterminée entre le rayon de pneu chargé et le rayon de roulement effectif pour le pneu.

14. Véhicule utilitaire lourd (100) comprenant l'agencement selon la revendication 13.

15. Véhicule utilitaire lourd (100) selon la revendication 14, dans lequel l'agencement comprend au moins un émetteur-récepteur radar agencé pour transmettre et recevoir un signal radar (115), dans lequel ledit au moins un émetteur-récepteur radar est agencé en direction des voies sur lesquelles les roues du véhicule utilitaire lourd (100) doivent être déplacées.

FIG. 1

FIG. 2A

FIG. 2B

FIG. 3

FIG. 4A

FIG. 4B

FIG. 5A

FIG. 5B

FIG. 5C

FIG. 5D

FIG. 6A

FIG. 6B

FIG. 7

FIG. 8A

FIG. 8B

FIG. 9

FIG. 10A

FIG. 10B

130, 140, 700

710

720

730

**FIG. 11**

800

810

820

**FIG. 12**

**EP 4 543 694 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5793285 A
- WO 2019197929 A
- US 20040138802 A
- EP 1739451 A1

**Non-patent literature cited in the description**

- **HANS PACEJKA**. Tyre and vehicle dynamics. Elsevier Ltd., 2012
- **SANDEEP RAO**. Introduction to mmwave Sensing: FMCW Radars. Texas Instruments, 2017